# EUROPEAN PATENT SPECIFICATION

(11) **EP 0 917 708 B1**
(45) Date of publication and mention of the grant of the patent: **27.03.2002**
(21) Application number: 97930624.8
(22) Date of filing: 04.07.1997
(51) Int. Cl.: G10L 15/06

(54) **PATTERN RECOGNITION**
MUSTERERKENNUNG
RECONNAISSANCE DE FORMES

(30) Priority: 29.07.1996 EP 96305530
(43) Date of publication of application: 26.05.1999
(73) Proprietor: BRITISH TELECOMMUNICATIONS public limited company, London EC1A 7AJ (GB)
(72) Inventor: RINGLAND, Simon, Patrick, Alexander, Martlesham Heath Ipswich IP5 7TB (GB); TALINTYRE, John, Edward, Essex CM15 8QE (GB)
(74) Representative: Lloyd, Barry George William
(86) International application number: GB9701808
(87) International publication number: WO9805028

(56) References cited:
- EP-A- 0 166 598
- EP-A- 0 202 534
- EP-A- 0 615 227
- US-A- 5 263 097
- BIEM A ET AL: "FEATURE EXTRACTION BASED ON MINIMUM CLASSIFICATION ERROR/ GENERALIZED PROBABILISTIC DESCENT METHOD" SPEECH PROCESSING, MINNEAPOLIS, APR. 27 - 30, 1993, vol. 2 OF 5, 27 April 1993, INSTITUTE OF ELECTRICAL AND ELECTRONICS ENGINEERS, pages II-275-278, XP000427779

## Description

This invention relates to pattern recognition and in particular to a method of processing for speech recognition.

One known method of pattern recognition involves the comparison of recognition feature data, derived from an input signal, with predetermined reference data, a pattern recognition decision being made in dependence upon the results of that comparison.

In a known method of speech recognition, for example, recognition feature data are derived from digitised speech signals and compared with reference data held in models representing speech utterances, the results of the comparison being analysed and a recognition decision reached.

A known difficulty arises in speech recognition in which portions of an input signal may be mistakenly recognised, for instance as valid speech utterances beyond those present in the input signal or as valid utterances in replacement of those present in the input signal. Additional items recognised by a speech recogniser, beyond those present in the input signal, are known as insertion errors. Items recognised in replacement of those present in the input signal are known as substitution errors. Substitution may also involve replacement, in the recognition result, of a valid utterance with a known non-speech item.

European Patent Application no. EP-A-0 202 534 discloses a continuous word recognition system employing a method for deriving reference data based upon demi-word pairs. In that method, demi-word reference patterns are generated by comparing registration patterns of discrete and continuously spoken words by a user with preliminarily prepared "fixed" patterns for words to be recognised. The method includes an amendment step such that part of the fixed pattern set may be subsequently amended based upon information obtained during the reference pattern generation step to take account of variations in a user's speech.

According to the present invention there is now proposed a method of deriving reference data for use in pattern recognition as set forth in claim 1, in which recognition feature data, derived from an input signal, are compared with reference data and recognition of a pattern is indicated in dependence upon the said comparison, the reference data being derived from a set of signals representing patterns to be recognised according to the steps of:
(a) deriving from the set of signals a first set of reference data representing a set of patterns to be recognised;
(b) deriving recognition feature data from the set of signals and comparing said recognition feature data with the first set of reference data;
(c) identifying those portions of the set of signals for which patterns are mistakenly recognised in dependence upon the comparison at step (b); and
(d) from the signal portions identified at step (c), deriving a second set of reference data.

The present invention in particular seeks to recognise and model those portions of an input signal likely to cause insertion errors or substitution errors and hence to improve the overall recognition performance of pattern recognisers, and of speech recognisers in particular.

Preferably the first set of reference data is derived from a first part of the set of signals and the recognition feature data is derived from a second, mutually exclusive part of the set of signals. Preferably the identified portions of the signals from the second part are those for which patterns are mistakenly recognised as being additional occurrences of patterns from the set of patterns to be recognised.

It has been found to be beneficial to train models on the largest available training signal set. Preferably, therefore, the first set of reference data are subsequently recreated from the entire training signal set.

There is further proposed a method of pattern recognition as set forth in claim 6 and a method of speech recognition as set forth in claim 8.

That part of the second set of reference data representing an insertion error is known hereinafter as an insertion model, while that part representing a substitution error is known hereinafter as a substitution model.

The use of insertion models, for example, when applied to speech recognition, has resulted in a US English connected digit recogniser having the benefit of a 30% reduced error rate.

The invention will now be described by way of example only with reference to the accompanying drawings in which:
Figure 1 is a diagram showing the main features of a speech recogniser known in the art;
Figure 2 shows a typical recognition network for the recognition of one of a series of spoken digits;
Figure 3 is a diagram showing examples of an insertion error and a substitution error arising in speech recognition;
Figure 4 shows the recognition network from Figure 2 with the addition of an insertion model according to the present invention;
Figure 5 shows the recognition network of Figure 4 with the addition of substitution models according to the present invention;
Figure 6 shows the steps for deriving insertion and substitution models according to the present invention.

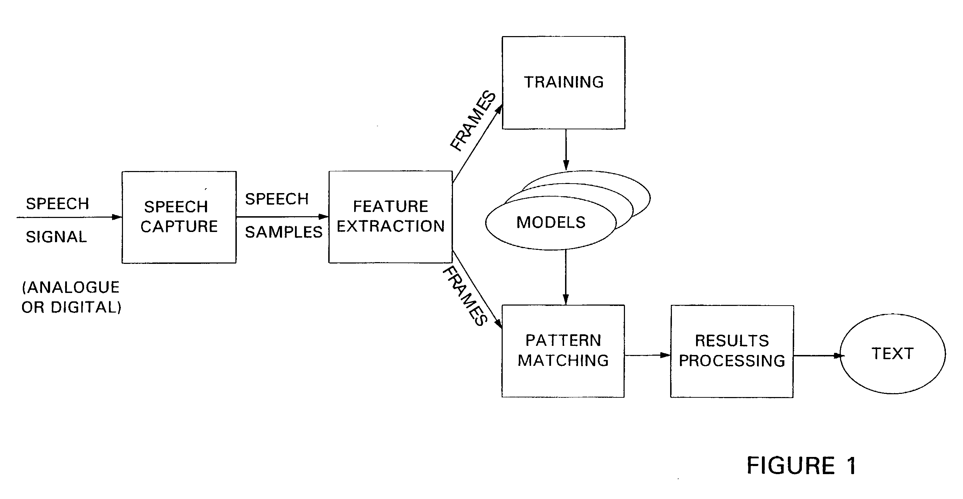

Referring to Figure 1, a known form of speech recogniser includes components for signal capture 1, feature extraction 2, parsing or pattern matching 3 with reference to models 4, and parser results processing 5. A training component 6 is also provided.

The operation of a speech recogniser will now be described, using insertion models and substitution models derived according to the present invention. A description of a preferred method for derivation of insertion models and substitution models will then follow.

An input to a speech recogniser may be a physical speech signal captured by a microphone or, in a telephony-related application, the speech recogniser may be connected to a telecommunications network and receive either analogue or digital representations of an original speech signal.

The output of the signal capture component 1 is a sampled digital representation of the original signal according to a predetermined format. A typical sampling rate is 8 KHz, resulting in a digital data output of 64,000 bits/s if each sample is represented by an 8 bit number.

Speech recognition is not normally performed on speech samples directly because they contain a great deal of redundant information. Instead, the speech samples are first analysed in a feature extraction component 2 which extracts from the speech samples a more compact, more perceptually significant set of data comprising a sequence of feature frames. Speech samples are typically assembled into packets of 32 ms duration, the features to be extracted being based upon the signal power over a selection of frequency bands from within each 32 ms packet. A typical method of feature extraction from a speech signal is described in "Fundamentals of Speech Recognition" Chapter 3, Lawrence Rabiner & Biing-Hwang Juang, Prentice Hall, 1993.

From the extracted feature frames the recogniser then attempts to identify a corresponding sequence of patterns from a reference pattern set. In a speech recogniser, the reference pattern set includes speech units such as words, phrases or phonemes and is represented by reference data held, for example, as one or more models 4, such as Hidden Markov Models (HMMs). However, any suitable form of recognition reference data may be used. A pattern matching component 3 compares the extracted feature frames with the reference data models 4 and identifies, as output, the sequence or sequences of models which best match the captured data. Further processing 5 of the pattern matching results may be required to arrive at a recognition decision, particularly where more than one model sequence is initially identified as being a possible representation of the captured data.

The reference data for a speech recogniser are derived during a separate phase, known as "training", for which a training component 6 is required. In the training phase, signals, known to be examples of speech units or other sounds required to form the pattern set of the recogniser, are captured in the normal way, the digitised samples analysed and the appropriate features extracted as frames. From these frames the reference data are derived by the training component 6 and stored as one or more models 4. One or more models typically represent the pattern set of a speech recogniser, the or each model representing a speech or other sound unit in the pattern set. A typical model representing a speech unit to be recognised is known as a vocabulary model. A model of an out-of-vocabulary sound or a non-speech sound, e.g. noise or silence, included in the pattern set, is known as a noise model.

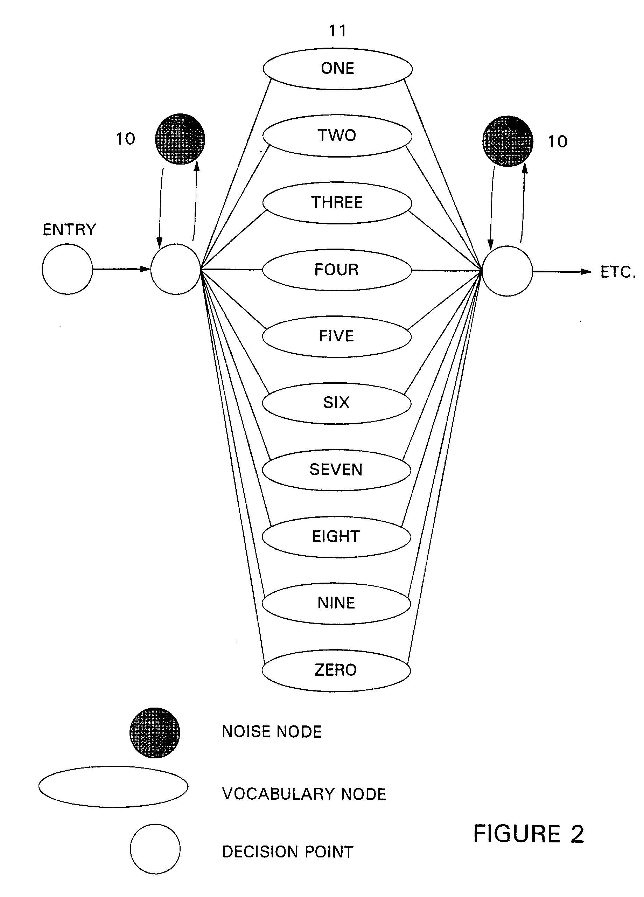

By way of example, a speech recogniser as described may be applied to the recognition of a sequence of spoken digits. From feature frames extracted from the input signal, the speech recogniser performs a recognition sequence of analysis similar to that shown in the network of Figure 2. In that analysis the recogniser attempts to positively identify spoken digits separated by periods of noise, including silence, by referring to reference data including a noise model 10.

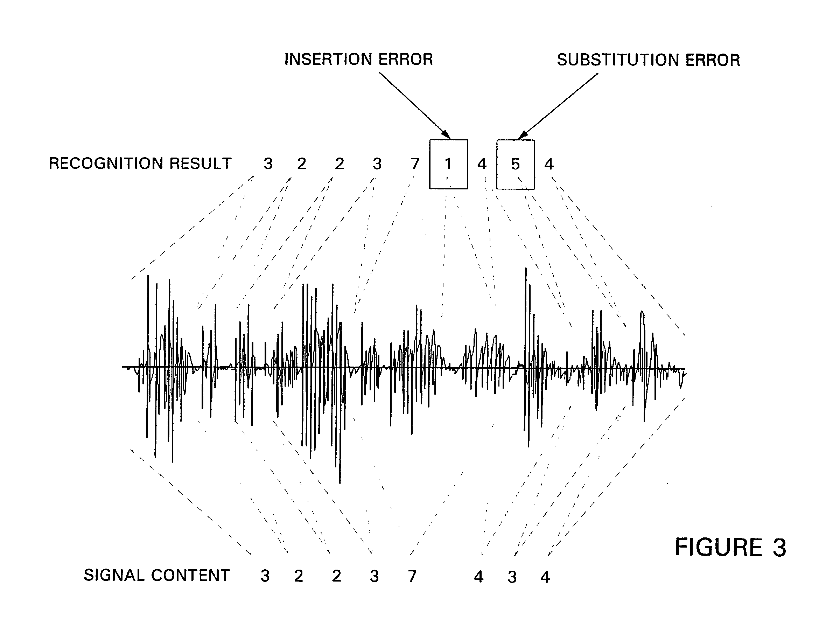

However, in attempting to recognise a spoken sequence of digits the situation may arise, as illustrated for example in Figure 3, in which a speech recogniser recognises nine digits when only eight were spoken, of which the sixth recognised digit, in this example a "1", may have been mistakenly recognised from a period of background noise and the eighth recognised digit, in this example a "5", may have been mistakenly recognised from a portion of the input signal representing a "3". The additional "1" is an example of an insertion error. The "5" is an example of a substitution error.

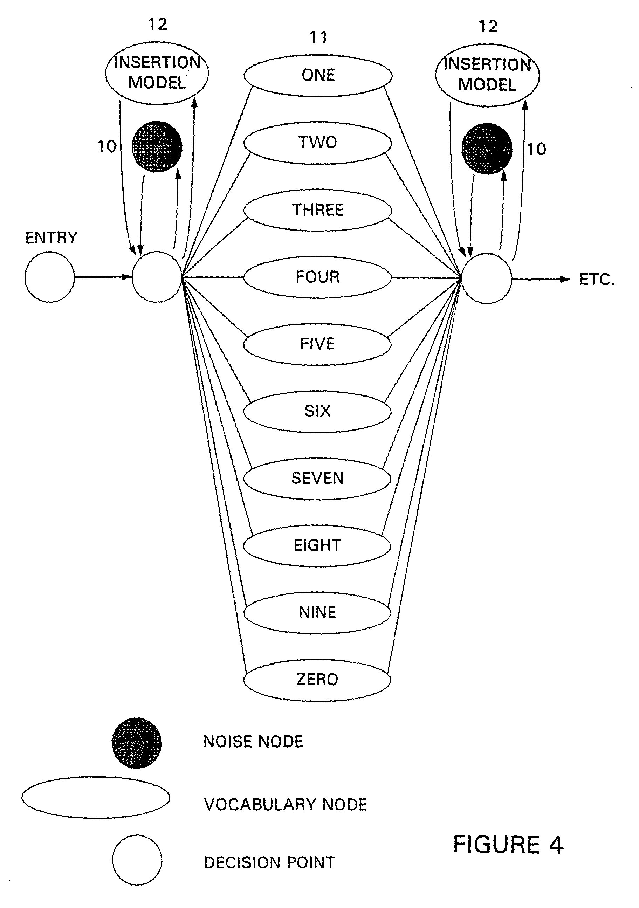

In an attempt to avoid insertion errors, insertion models 12 are used, as illustrated in Figure 4, according to a preferred embodiment of the present invention in which, besides attempting to match the input signal to the examples of noise represented by the noise model 10, the speech recogniser attempts, in parallel, to match the input signal to the insertion models 12.

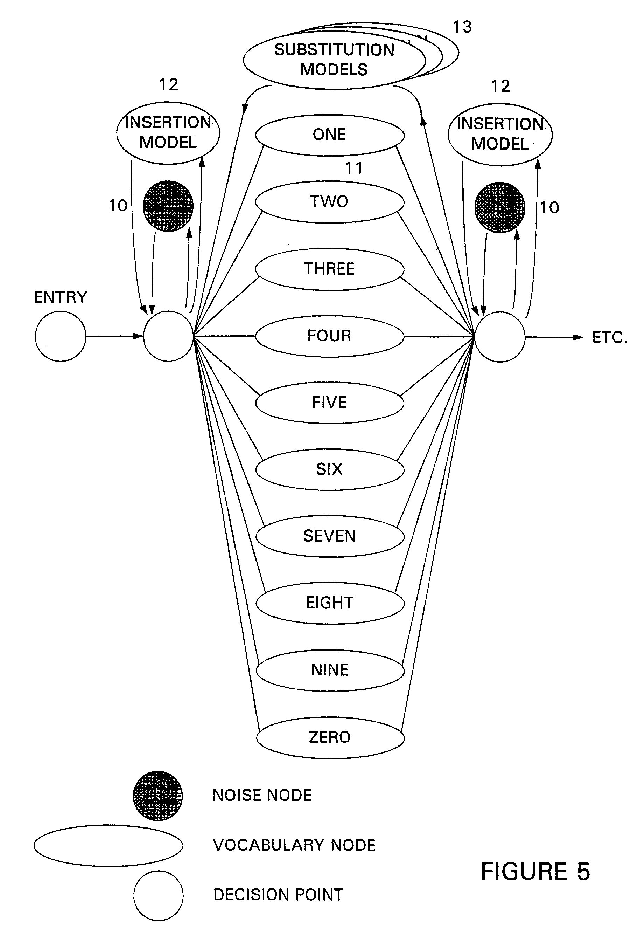

In an attempt to avoid substitution errors, substitution models 13 are used, as illustrated in Figure 5, according to a preferred embodiment of the present invention in which, besides attempting to match the input signal to vocabulary represented by vocabulary models 11, the speech recogniser attempts, in parallel, to match the input signal to the substitution models 13.

The derivation of reference data for use in pattern recognition, including the derivation of reference data for insertion models and a substitution models, will now be described according to a preferred application of the present invention in which the input signals and the reference data represent speech signals.

In creating a speech recogniser, reference data must first be derived from examples of signals known to represent those elements of speech or non-speech sounds which the recogniser is later expected to recognise. A set of training signals is selected for this purpose, normally to derive data for vocabulary and noise models but, according to the present invention, also to derive data for corresponding insertion and substitution models.

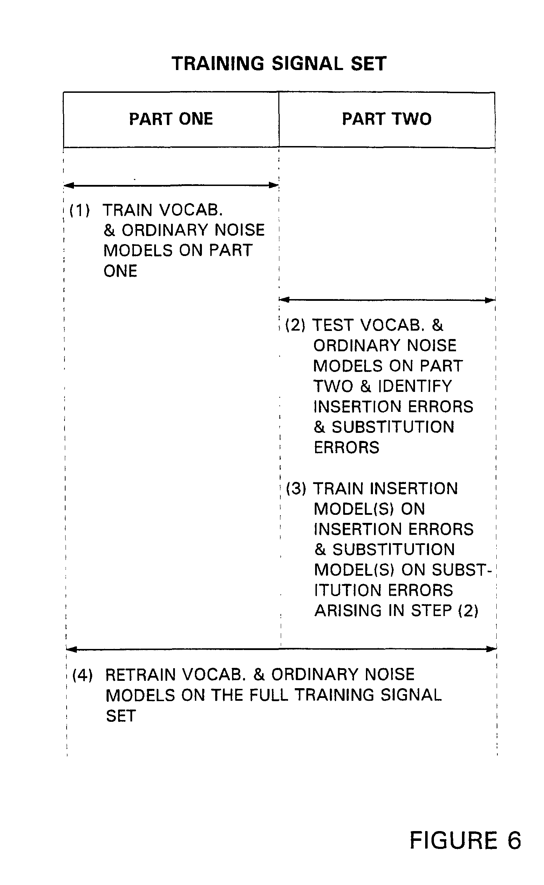

A preferred method of deriving the reference data is shown in Figure 6. Referring to Figure 6 and to Figure 1, according to this method a training signal set is selected containing known speech utterances, and is divided into two parts, a first part and a second part, each containing examples of all the speech utterances. At Step (1) the vocabulary and noise models are derived using the first part as the input signal. The signals from the first part are processed by the speech capture component 1 and feature extraction component 2 of the speech recogniser. The resulting extracted feature frames, corresponding to known elements of speech or noise, are input to the training component 6. The training component 6 derives reference data from the feature frames and uses these data to create models 4 representing each of the known speech or noise elements. The above steps are well known to persons skilled in the art and will not be discussed further herein.

At Step (2), using the vocabulary and noise models derived from Step (1), the speech recogniser is then tested using the second part of the training signal set as input. These tests result in recognition decisions based upon the models 4 derived from the first part data. Standard Dynamic Programming (DP) alignment software is used to detect alignment errors between the results of the recognition on the second part of the data and the known speech content of that data. An example of suitable software is the US National Institute of Standards and Technology (NIST) Speech Recognition Scoring Package (SCORE) version 3.6.2. A copy of this software is available from NIST, in particular via the worldwide web by anonymous FTP://jaguar.ncsl.nist.gov in the pub directory. Alternative software, also available from NIST, is sclite version 1.3. The resulting insertion errors and substitution errors are identified, along with the corresponding recognition feature frames.

Given the insertion and substitution errors and the corresponding feature frames, the training component 6 then derives, at Step (3), one or more insertion models and one or more substitution models based on the corresponding feature frames. These models are then used in subsequent recognition as described earlier.

It will be clear to those skilled in the art that the use of insertion models and substitution models in pattern recognition need not be confined to speech recognisers. Indeed, any pattern recognition application in which characteristic features of a signal are compared with corresponding features modelled from known examples of the patterns sought may benefit from the additional use of such models to reduce recognition errors. For example, insertion or substitution errors arising in image analysis applications may be modelled in a similar way, improving recognition performance in, for example, free-form handwriting or picture recognition applications.

## Claims

1. A method of deriving reference data for use in pattern recognition in which recognition feature data, derived from an input signal, are compared with reference data and recognition of a pattern is indicated in dependence upon the said comparison, the reference data being derived from a set of signals representing patterns to be recognised according to the steps of:
(a) deriving from the set of signals a first set of reference data representing a set of patterns to be recognised;
(b) deriving recognition feature data from the set of signals and comparing said recognition feature data with the first set of reference data;
(c) identifying those portions of the set of signals for which patterns are mistakenly recognised in dependence upon the comparison at step (b); and
(d) from the signal portions identified at step (c), deriving a second set of reference data.

2. A method of deriving reference data according to Claim 1 in which, at step (c), the portions of the signals to be identified are those for which patterns are mistakenly recognised as being additional occurrences of patterns from the set of patterns to be recognised.

3. A method according to claim 1 or 2, in which the first set of reference data is derived from a first part of the set of signals and the recognition feature data is derived from a second, mutually exclusive part of the set of signals.

4. A method of deriving reference data according to Claim 3 in which, following step (d), the first set of reference data are rederived using both the first part and the second part of the set of signals.

5. A method of deriving reference data according to any one of Claims 1, 2, 3 or 4, wherein the input signal represents a speech signal.

6. A method of pattern recognition comprising:
(i) deriving recognition feature data from an input signal;
(ii) comparing said feature data with predetermined reference data;
(iii) indicating recognition of a pattern in dependence upon the comparison;
**characterised in that**
the predetermined reference data comprises a first set of reference data derived from signals known to represent patterns from a set of patterns to be recognised by the comparison, and a second set of reference data derived from signals from which patterns are identified as having been mistakenly recognised and wherein the predetermined reference data are derived from a set of signals, the method of derivation comprising the steps of:
(a) dividing the set of signals into a first part and a second part;
(b) from the first part, deriving the first set of reference data representing a set of patterns to be recognised;
(c) using the second part as the input signal, performing steps (i) to (iii) above wherein, at step (ii), the first set of reference data is used as the predetermined reference data;
(d) identifying those portions of the signals from the second part for which, at step (iii), patterns are mistakenly recognised;
(e) from the signal portions identified at step (d), deriving the second set of reference data.

7. A method according to claim 6, wherein the second set of reference data represent patterns mistakenly recognised as being additional occurrences of patterns from a set of patterns to be recognised.

8. A method of speech recognition comprising:
(i) deriving recognition feature data from an input speech signal;
(ii) comparing said feature data with predetermined reference data;
(iii) indicating recognition of an utterance in dependence upon the comparison;
**characterised in that**
the predetermined reference data comprises a first set of reference data derived from signals known to represent utterances from a set of utterances to be recognised by the comparison, and a second set of reference data derived from signals from which utterances are identified as having been mistakenly recognised and wherein the predetermined reference data are derived from a set of signals, the method of derivation comprising the steps of:
(a) dividing the set of signals into a first part and a second part;
(b) from the first part, deriving the first set of reference data representing a set of utterances to be recognised;
(c) using the second part as the input signal, performing steps (i) to (iii) above wherein, at step (ii), the first set of reference data is used as the predetermined reference data;
(d) identifying those portions of the signals from the second part for which, at step (iii), utterances are mistakenly recognised;
(e) from the signal portions identified at step (d), deriving the second set of reference data.

## Patentansprüche

1. Verfahren zum Ableiten von Referenzdaten für die Verwendung bei der Mustererkennung, in der Erkennungsmerkmalsdaten, die aus einem Eingangssignal abgeleitet werden, mit Referenzdaten verglichen werden und die Erkennung eines Musters in Abhängigkeit von dem Vergleich angegeben wird, wobei die Referenzdaten aus einer Menge von Signalen, die zu erkennende Muster repräsentieren, in Übereinstimmung mit den folgenden Schritten abgeleitet werden:
(a) Ableiten einer ersten Menge von Referenzdaten, die eine Menge von zu erkennenden Mustern repräsentieren, aus der Menge von Signalen;
(b) Ableiten von Erkennungsmerkmalsdaten aus der Menge von Signalen und Vergleichen der Erkennungsmerkmalsdaten mit der ersten Menge von Referenzdaten;
(c) Identifizieren jener Abschnitte der Menge von Signalen, für die Muster fehlerhaft erkannt werden, in Abhängigkeit vom Vergleich im Schritt (b); und
(d) Ableiten einer zweiten Menge von Referenzdaten aus den im Schritt (c) identifizierten Signalabschnitten.

2. Verfahren zum Ableiten von Referenzdaten nach Anspruch 1, bei dem im Schritt (c) die zu identifizierenden Abschnitte der Signale jene sind, für die Muster fehlerhaft als zusätzliche Auftrittsereignisse von Mustern aus der Menge von zu erkennenden Mustern erkannt werden.

3. Verfahren nach Anspruch 1 oder 2, bei dem die erste Menge von Referenzdaten aus einem ersten Teil der Menge von Signalen abgeleitet wird und die Erkennungsmerkmalsdaten aus einem zweiten, sich gegenseitig ausschließenden Teil der Menge von Signalen abgeleitet werden.

4. Verfahren zum Ableiten von Referenzdaten nach Anspruch 3, bei dem nach dem Schritt (d) die erste Menge von Referenzdaten unter Verwendung sowohl des ersten Teils als auch des zweiten Teils der Menge von Signalen erneut abgeleitet wird.

5. Verfahren zum Ableiten von Referenzdaten nach einem der Ansprüche 1, 2, 3 oder 4, bei dem das Eingangssignal ein Sprachsignal repräsentiert.

6. Verfahren zur Mustererkennung, das umfaßt:
(i) Ableiten von Erkennungsmerkmalsdaten aus einem Eingangssignal;
(ii) Vergleichen der Merkmalsdaten mit vorgegebenen Referenzdaten;
(iii) Angeben der Erkennung eines Musters in Abhängigkeit von dem Vergleich;
**dadurch gekennzeichnet, daß**
die vorgegebenen Referenzdaten eine erste Menge von Referenzdaten, die aus Signalen abgeleitet werden, von denen durch den Vergleich bekannt ist, daß sie Muster aus einer Menge von zu erkennenden Mustern repräsentieren, und eine zweite Menge von Referenzdaten, die aus Signalen abgeleitet werden, von denen Muster als fehlerhaft erkannt identifiziert werden, umfassen und wobei die vorgegebenen Referenzdaten aus einer Menge von Signalen abgeleitet werden, wobei das Ableitungsverfahren die folgenden Schritte umfaßt:
(a) Unterteilen der Menge von Signalen in einen ersten Teil und einen zweiten Teil;
(b) Ableiten der ersten Menge von Referenzdaten, die eine Menge von zu erkennenden Mustern repräsentieren, aus dem ersten Teil;
(c) Verwenden des zweiten Teils als Eingangssignal und Ausführen der obigen Schritte (i) bis (iii), wobei im Schritt (ii) die erste Menge von Referenzdaten als die vorgegebenen Referenzdaten verwendet wird;
(d) Identifizieren jener Abschnitte der Signale aus dem zweiten Teil, für die im Schritt (iii) Muster fehlerhaft erkannt werden;
(e) Ableiten der zweiten Menge von Referenzdaten aus den im Schritt (d) identifizierten Signalabschnitten.

7. Verfahren nach Anspruch 6, bei dem die zweite Menge von Referenzdaten Muster repräsentiert, die fehlerhaft als zusätzliche Auftrittsereignisse von Mustern aus einer Menge zu erkennenden Mustern erkannt werden.

8. Verfahren zur Spracherkennung, das umfaßt:
(i) Ableiten von Erkennungsmerkmalsdaten aus einem Eingangssprachsignal;
(ii) Vergleichen der Merkmalsdaten mit vorgegebenen Referenzdaten;
(iii) Angeben einer Erkennung einer Sprachäußerung in Abhängigkeit vom Vergleich;
**dadurch gekennzeichnet, daß**
die vorgegebenen Referenzdaten eine erste Menge von Referenzdaten, die aus Signalen abgeleitet ist, von denen durch den Vergleich bekannt ist, daß sie Sprachäußerungen aus einer Menge von zu erkennenden Sprachäußerungen repräsentieren, und eine zweite Menge von Referenzdaten umfassen, die aus Signalen abgeleitet sind, aus denen Sprachäußerungen als fehlerhaft erkannt identifiziert werden, wobei die vorgegebenen Referenzdaten aus einer Menge von Signalen abgeleitet werden, wobei das Ableitungsverfahren die folgenden Schritte umfaßt:
(a) Unterteilen der Menge von Signalen in einen ersten Teil und einen zweiten Teil;
(b) Ableiten der ersten Menge von Referenzdaten, die eine Menge von zu erkennenden Sprachäußerungen repräsentieren, aus dem ersten Teil;
(c) Verwenden des zweiten Teils als das Eingangssignal und Ausführen der obigen Schritte (i) bis (iii), wobei im Schritt (ii) die erste Menge von Referenzdaten als die vorgegebenen Referenzdaten verwendet wird;
(d) Identifizieren jener Abschnitte der Signale von dem zweiten Teil, für die im Schritt (iii) Sprachäußerungen fehlerhaft erkannt werden;
(e) Ableiten der zweiten Menge von Referenzdaten aus den im Schritt (d) identifizierten Signalabschnitten.

## Revendications

1. Procédé pour dériver des données de référence à utiliser dans une reconnaissance de motifs, dans lequel des données de caractéristiques de reconnaissance, dérivées d'un signal d'entrée, sont comparées à des données de référence et la reconnaissance d'un motif est indiquée en fonction de ladite comparaison, les données de référence étant dérivées d'un ensemble de signaux représentant des motifs à reconnaître selon les étapes suivantes :
(a) dériver, à partir de l'ensemble de signaux, un premier ensemble de données de référence représentant un ensemble de motifs à reconnaître;
(b) dériver des données de caractéristiques de reconnaissance à partir de l'ensemble de signaux et comparer lesdites données de caractéristiques de reconnaissance au premier ensemble de données de référence;
(c) identifier les parties de l'ensemble de signaux pour lesquelles des motifs sont reconnus par erreur en fonction de la comparaison à l'étape (b); et
(d) à partir des parties de signaux identifiées à l'étape (c), dériver un deuxième ensemble de données de référence.

2. Procédé de dérivation de données de référence selon la revendication 1, dans lequel, à l'étape (c), les parties des signaux à identifier sont celles pour lesquelles des motifs sont reconnus par erreur comme étant des occurrences supplémentaires de motifs à partir de l'ensemble de motifs à reconnaître.

3. Procédé selon la revendication 1 ou 2, dans lequel le premier ensemble de données de référence est dérivé d'une première partie de l'ensemble de signaux et les données de caractéristiques de reconnaissance sont dérivées d'une deuxième partie, mutuellement non compatibles, de l'ensemble de signaux.

4. Procédé de dérivation de données de référence selon la revendication 3, dans lequel, suivant l'étape (d), le premier ensemble de données de référence est à nouveau dérivé au moyen à la fois de la première partie et de la deuxième partie de l'ensemble de signaux.

5. Procédé de dérivation de données de référence selon l'une quelconque des revendications 1, 2, 3 ou 4, dans lequel le signal d'entrée représente un signal vocal.

6. Procédé de reconnaissance de formes, comprenant :
(i) la dérivation de données de caractéristiques de reconnaissance à partir d'un signal d'entrée ;
(ii) la comparaison desdites données de caractéristiques avec des données de référence prédéterminées ;
(iii) l'indication de reconnaissance d'un motif en fonction de la comparaison ;
**caractérisé en ce que** les données de référence prédéterminées comprennent un premier ensemble de données de référence dérivées de signaux connus pour représenter des motifs à partir d'un ensemble de motifs à reconnaître par la comparaison, et un deuxième ensemble de données de référence dérivées de signaux à partir desquels des motifs sont identifiés comme ayant été reconnus par erreur et dans lesquelles les données de référence prédéterminées sont dérivées d'un ensemble de signaux, le procédé de dérivation comprenant les étapes suivantes :
(a) diviser l'ensemble de signaux en une première partie et une deuxième partie ;
(b) à partir de la première partie, dériver le premier ensemble de données de référence représentant un ensemble de motifs à reconnaître ;
(c) utiliser la deuxième partie comme signal d'entrée, exécuter les étapes (i) à (iii) ci-dessus dans lesquelles, à l'étape (ii), le premier ensemble de données de référence est utilisé comme données de référence prédéterminées ;
(d) identifier les parties des signaux à partir de la deuxième partie pour lesquelles, à l'étape (iii), des motifs sont reconnus par erreur ;
(e) à partir des parties de signal identifiées à l'étape (d), dériver le deuxième ensemble de données de référence.

7. Procédé selon la revendication 6, dans lequel le deuxième ensemble de données de référence représente des motifs reconnus par erreur comme étant des occurrences supplémentaires de motifs à partir d'un ensemble de motifs à reconnaître.

8. Procédé de reconnaissance vocale, comprenant :
(i) la dérivation de données de caractéristiques de reconnaissance à partir d'un signal vocal d'entrée;
(ii) la comparaison desdites données de caractéristiques avec des données de référence prédéterminées;
(iii) l'indication de reconnaissance d'un énoncé en fonction de la comparaison ;
**caractérisé en ce que** les données de référence prédéterminées comprennent un premier ensemble de données de référence dérivées de signaux connus pour représenter des énoncés à partir d'un ensemble d'énoncés à reconnaître par la comparaison, et un deuxième ensemble de données de référence dérivées de signaux à partir desquels des énoncés sont identifiés comme ayant été reconnus par erreur et dans lesquels les données de référence prédéterminées sont dérivées d'un ensemble de signaux, le procédé de dérivation comprenant les étapes suivantes :
(a) diviser l'ensemble de signaux en une première partie et une deuxième partie ;
(b) à partir de la première partie, dériver le premier ensemble de données de référence représentant un ensemble d'énoncés à reconnaître ;
(c) utiliser la deuxième partie comme signal d'entrée, exécuter les étapes (i) à (iii) ci-dessus dans lesquelles, à l'étape (ii), le premier ensemble de données de référence est utilisé comme données de référence prédéterminées ;
(d) identifier les parties des signaux à partir de la deuxième partie pour laquelle, à l'étape (iii), des énoncés sont reconnus par erreur ;
(e) à partir des parties de signaux identifiées à l'étape (d), dériver le deuxième ensemble de données de référence.
